# FASCICULE DE BREVET EUROPEEN

(11) **EP 1 178 247 B1**
(45) Date de publication et mention de la délivrance du brevet: **25.02.2004**
(21) Numéro de dépôt: 01401859.2
(22) Date de dépôt: 11.07.2001
(51) Int. Cl.: F16H 63/30, F16H 57/02

(54) **Boîte de vitesses pour véhicule automobile équipée d'un pignon baladeur de marche arrière**
Kraftfahrzeuggetriebe mit Schubzahnrad für den Rückwärtsgang
Vehicle transmission with sliding gear wheel for reverse

(30) Priorité: 31.07.2000 FR 0010061
(43) Date de publication de la demande: 06.02.2002
(73) Titulaire: Peugeot Citroen Automobiles, 92200 Neuilly Sur Seine (FR)
(72) Inventeur: Ploe, Pierre, 92800 Puteaux (FR)
(74) Mandataire: De Cuenca, Emmanuel Jaime

(56) Documents cités:
- DE-A- 3 627 851
- US-A- 3 320 824
- US-A- 4 793 200
- US-A- 5 647 246

## Description

La présente invention concerne une boîte de vitesses pour véhicule automobile du type comprenant un pignon baladeur de marche arrière monté coulissant sur un axe dont chacune des extrémités est fixée dans une partie du carter formant butée pour le pignon

Certaines boîtes de vitesse pour véhicule automobile utilisent, en tant que dispositif de commande de marche arrière, un pignon baladeur monté coulissant sur un axe, qui vient s'intercaler par translation entre deux autres pignons montés sur l'arbre d'entrée et de sortie de boîte. La translation de ce pignon baladeur s'effectue par le biais d'un organe directement actionné par le conducteur du véhicule. Le document DE 36 27 851 décrit une telle boite de vitesse, conformément au préambule de la revendication 1.

Lorsque la force avec laquelle le conducteur enclenche la marche arrière est trop importante, le pignon baladeur a tendance à venir claquer contre sa butée dans le carter de la boîte. Ce claquement provoque un bruit sourd du carter en forme de cloche, qui se répercute dans l'habitacle du véhicule en un bruit incommodant pour les passagers.

Le but de l'invention est alors de remédier à cet inconvénient et de proposer une boite de vitesses du type précité qui. ne génère pas de bruit incommodant dans l'habitacle du véhicule lors du passage de la marche arrière, qui soit simple et peu coûteuse à réaliser.

Cet objectif est atteint par les caractéristiques de la revendication 1.

Avantageusement, dans une variante selon laquelle au moins une cage à aiguilles est intercalée entre l'alésage interne du pignon et l'axe, la rondelle conforme à l'invention présente des créneaux en contact avec l'axe adaptés pour permettre le passage d'un lubrifiant dudit roulement.

Avantageusement et selon l'invention, la rondelle est montée serrée dans le pignon. Ainsi, outre sa tenue propre, elle assure également le maintien de la cage à aiguilles autour de l'alésage de l'axe. Il est de ce fait possible d'avoir une simplification de conception de celle-ci.

De préférence, la partie du surmoulage située du côté de la butée du pignon amortit une majeure partie du choc.

Avantageusement, la partie du surmoulage située du côté de la face du pignon permet un montage aisé de la rondelle dans le pignon.

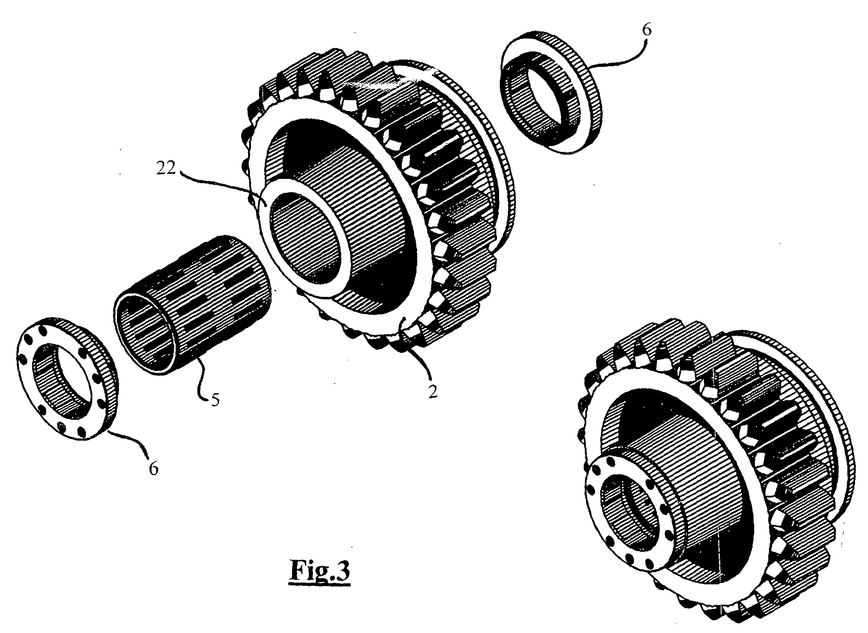

D'autres avantages et caractéristiques apparaîtront à la lecture de la description détaillée d'un exemple de réalisation de l'invention faite en référence aux figures 1 à 3 dans lesquelles :
- la figure 1 est une représentation schématique d'une partie d'une boite de vitesses conforme à l'invention ;
- les figures 2a et 2b sont des vues en coupe longitudinale et de face d'un pignon baladeur de marche arrière conforme à l'invention ;
- les figures 3a et 3b sont des vues en perspective et en perspective éclatée du pignon selon les figures 2 a et 2b.

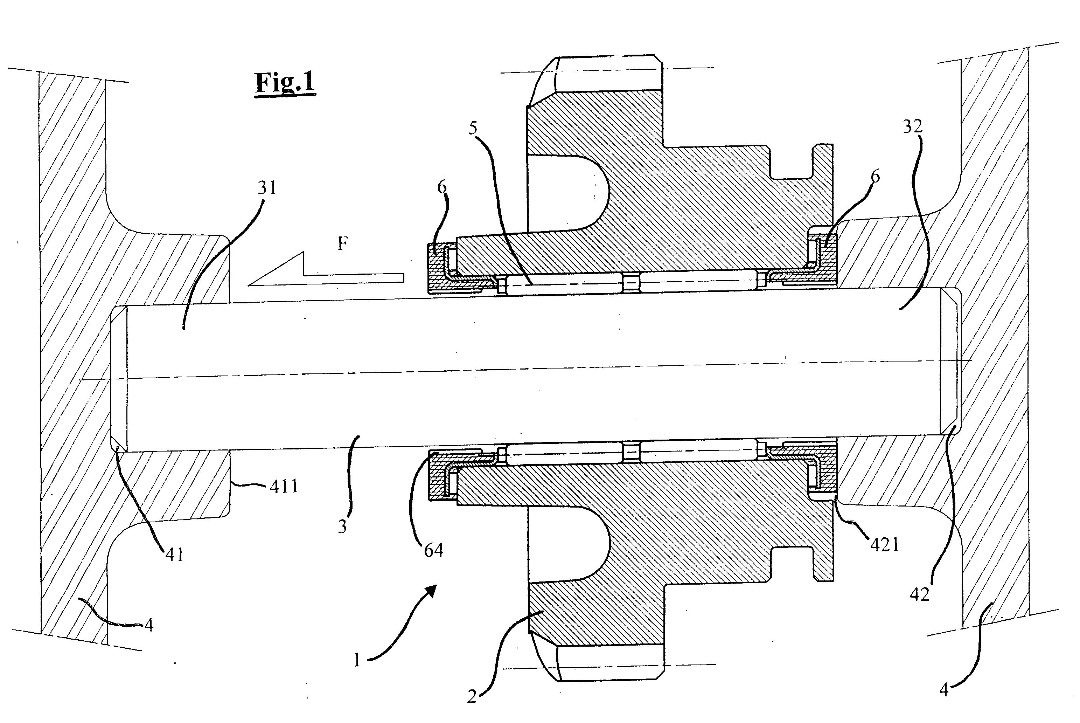

Sur la figure 1, on a représenté une partie d'une boîte de vitesses 1 conforme à l'invention dans laquelle un pignon baladeur 2 de marche arrière est monté coulissant sur un axe cylindrique 3. Chacune des extrémités 31, 32 de l'axe 3 est engagée dans un logement respectif 41, 42 pratiqué dans le carter 4. La partie extérieure du logement 411, 421 forme butée pour le pignon baladeur 2.

Entre l'alésage interne du pignon baladeur 2 et l'axe 3 est montée une cage à billes 5 maintenue en position par deux rondelles identiques 6 elles-mêmes montées serrées dans le pignon 2 à ses deux extrémités-tel qu'expliqué ci-après.

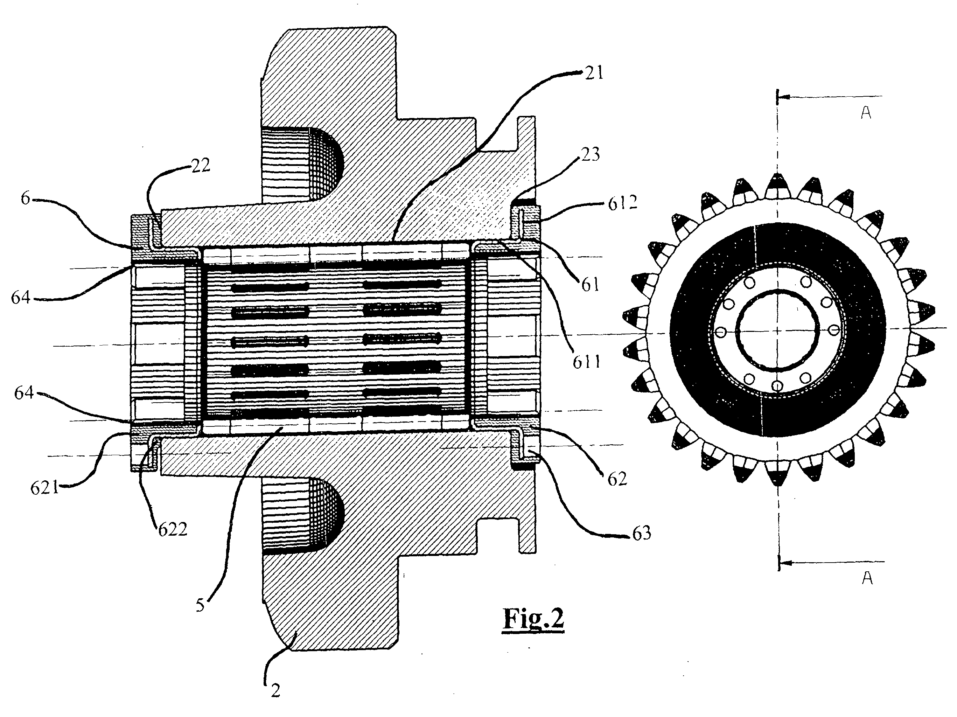

Chaque rondelle 6 est constituée d'une bague en métal 61 qui constitue le corps de la rondelle 6 et présente un surmoulage en matière plastique 62 comportant des évidements 63 (figure2). Ces évidements 63 de section circulaire sont réunis par groupe de trois de manière symétrique autour de l'axe 3.

La bague en métal 61 présente une partie 611 qui prend appui contre l'alésage interne 21 du pignon 2 et une autre partie 612 parallèle aux faces 22,23 du pignon 2. Cette partie confère à la rondelle 6 un effet ressort lors du choc du pignon contre la butée. La partie 621 du surmoulage située du côté de la butée 411 du pignon a une épaisseur suffisamment importante pour amortir une majeure partie du choc tandis que celle 622 située du côté de la face 21 du pignon a une épaisseur moindre et permet un montage aisé de la rondelle 6 dans le pignon 2. Les évidements 63 augmentent l'élasticité de la rondelle 6 et permettent donc d'augmenter son amortissement lors de son écrasement contre la butée 411,412.

Par ailleurs, chacune des rondelles 6 présente des créneaux 64 en contact avec l'axe. Chaque interstice, délimité entre deux créneaux 64 consécutifs, permet le passage de l'huile de lubrification de la boîte. La cage à aiguilles 5 est ainsi lubrifiée en permanence.

Lors du passage de la marche arrière par le conducteur du véhicule l'organe actionné par celui-ci vient déplacer le pignon baladeur 2 par coulissement sur l'axe 3 selon la direction de la flèche f et la rondelle 6 vient s'écraser contre la butée 411. Un majeure partie du choc est amortie par la partie du surmoulage 621 qui s'écrase à son tour et la bague en métal 61 fait effet ressort.

Il a été constaté que le bruit qui résulte du choc est coloré en un bruit mat De ce fait, le carter 4 de la boîte de vitesse ne sonne pas et le bruit qui résulte dans l'habitacle du véhicule n'est pas incommodant pour ses occupants.

Il va de soi que d'autres variantes de réalisation peuvent être envisagées sans pour autant sortir du cadre de l'invention telle que revendiquée. Par exemple, dans le cas où il est prévu une cage à billes qui a sa propre tenue dans le pignon, il est possible de disposer une rondelle conforme à l'invention directement sur la butée du carter.

## Revendications

1. Boîte de vitesses (1) pour véhicule automobile, du type comprenant un pignon baladeur de marche arrière (2) monté coulissant sur un axe (3) dont chacune des extrémités (31,32) est fixée dans une partie du carter (4) formant butée (411,421) pour le pignon, **caractérisée en ce que** au moins une rondelle (6) est intercalée entre le pignon baladeur et une des butées, ladite rondelle étant adaptée pour modifier le bruit résultant du choc du pignon contre la butée correspondante, la rondelle étant constituée d'une bague en métal (61) dont une partie (612) est parallèle aux faces (22,23) du pignon, et présentant un surmoulage (62) en matière plastique comportant des évidements (63).

2. Boîte de vitesses selon la revendication 1 dans laquelle au moins une cage à aiguilles (5) est intercalée entre l'alésage interne (21) du pignon et l'axe (3), **caractérisée en ce que** la rondelle (6) présente des créneaux (64) en contact avec l'axe adaptés pour permettre le passage d'un lubrifiant dudit roulement.

3. Boîte de vitesses selon l'une des revendications précédentes, **caractérisée en ce que** la rondelle est montée serrée dans le pignon.

4. Boîte de vitesses selon l'une des revendications précédente, **caractérisée en ce que** la partie du surmoulage située du côté de la butée du pignon (621) permet d'amortir une majeure partie du choc.

## Patentansprüche

1. Kraftfahrzeuggetriebe (1) mit einem Schieberad (2) für den Rückwärtsgang, das an einer Achse (3) verschiebbar montiert ist, deren Enden (31, 32) jeweils in einem Abschnitt des Gehäuses (4) befestigt sind, das einen Anschlag (411, 421) für das Zahnrad bildet, **dadurch gekennzeichnet, dass** mindestens eine Scheibe (6) zwischen das Schieberad und einen der Anschläge geschaltet ist, wobei die Scheibe das aus dem Schlag des Zahnrads gegen den entsprechenden Anschlag resultierende Geräusch verändern kann und von einem Metallring (61) gebildet wird, der einen zu den Flächen (22, 23) des Zahnrads parallelen Abschnitt (612) besitzt, und eine Anformung (62) aus Kunststoff mit Aussparungen (63) aufweist.

2. Getriebe nach Anspruch 1, bei dem mindestens ein Nadelkäfig (5) zwischen die innere Bohrung (21) des Zahnrads und die Achse (3) geschaltet ist, **dadurch gekennzeichnet, dass** die Scheibe (6) Zinnen (64) in Kontakt mit der Achse aufweist, die den Durchgang eines Schmiermittels für das Rollen ermöglichen.

3. Getriebe nach einem der vorhergehenden Ansprüche, **dadurch gekennzeichnet, dass** die Scheibe im Zahnrad eingeklemmt montiert ist.

4. Getriebe nach einem der vorhergehenden Ansprüche, **dadurch gekennzeichnet, dass** der auf der Seite des Anschlags des Zahnrads gelegene Abschnitt (621) der Anformung einen Großteil des Schlags dämpfen kann.

## Claims

1. Gear box (1) for a motor vehicle, of the type comprising a reverse sliding gear (2) mounted so as to slide on an axis (3) each end of which (31, 32) is fixed in part of the casing (4) forming a stop (411, 421) for the gear, **characterised in that** at least one washer (6) is inserted between the sliding gear and one of the stops, said washer being suitable for modifying the noise resulting from the impact of the gear against the corresponding stop, the washer being constituted by a metal ring (61), part of which (612) is parallel to the faces (22, 23) of the gear, and having an overmoulding (62) made of plastic material comprising cavities (63).

2. Gear box according to Claim 1 in which at least one needle cage (5) is inserted between the inner bore (21) of the gear and the axis (3), **characterised in that** the washer (6) has slots (64) in contact with the axis suitable for allowing the passage of a lubricant for said bearing.

3. Gear box according to one of the preceding claims, **characterised in that** the washer is mounted tight within the gear.

4. Gear box according to one of the preceding claims, **characterised in that** the overmoulded part located on the side of the gear (621) stop makes it possible to dampen a large part of the impact.
